# EUROPEAN PATENT APPLICATION

(11) **EP 4 344 192 A1**
(43) Date of publication of application: **27.03.2024**
(21) Application number: 22878667.9
(22) Date of filing: 28.06.2022
(51) Int. Cl.: H04N 5/92, H04N 5/77, H04N 21/435, H04N 23/00

(54) **ELECTRONIC DEVICE AND METHOD FOR GENERATING ADDITIONAL INFORMATION OF FILE IN ELECTRONIC DEVICE**

(30) Priority: 08.10.2021 KR 20210133598; 11.11.2021 KR 20210154522
(71) Applicant: Samsung Electronics Co., Ltd., Suwon-si, Gyeonggi-do 16677 (KR)
(72) Inventor: YOON, Kwanghyeok, Suwon-si Gyeonggi-do 16677 (KR); SO, Hyeonbin, Suwon-si Gyeonggi-do 16677 (KR); LEE, Changmin, Suwon-si Gyeonggi-do 16677 (KR); CHOI, Jaeho, Suwon-si Gyeonggi-do 16677 (KR); SHIN, Seokhwan, Suwon-si Gyeonggi-do 16677 (KR); JEONG, Hyojeong, Suwon-si Gyeonggi-do 16677 (KR); CHOI, Hyoungho, Suwon-si Gyeonggi-do 16677 (KR); HAN, Wonjeong, Suwon-si Gyeonggi-do 16677 (KR)
(74) Representative: HGF
(86) International application number: PCT/KR2022/009260
(87) International publication number: WO 2023/058844

(57) **Abstract**

An electronic device, according to various embodiments, comprises: a memory comprising a file system, and a DB which is configured for managing meta data of an image file; a display; and a processor. The processor may be configured to: after checking a request for detecting information of an image file, detect the information by reading the image file; after checking that the image file for which the information has been detected is a first image file in which meta data is not stored, generate, as capture date and time information of the first image file, the last modified time information of the first image file, which is stored in the file system; store the generated capture date and time information as file information of the first image file, which is managed in the file system; and store the capture date and time information, which has been stored as the file information of the first image in the file system, as the capture date and time information of the first image file in the DB.

## Description

### [Technical Field]

The disclosure relates to an electronic device and a method for generating additional information about a file in the electronic device.

### [Background Art]

An electronic device may sort files stored therein, based on time, and provide the sorted files. The electronic device may sort files based on creation date and time information depending on the type of the files and provide them or may sort files based on capture date and time information and provide them.

For example, in the case of images files that may be sorted based on capture date and time information, the electronic device may provide the user with image files sorted based on capture date and time information, using a database (DB) that manages metadata of the image files.

In the case of an image file storing metadata including capture date and time information, the electronic device may store metadata including the capture date and time information about the image file in the DB. In the case of an image file having a file format incapable of storing metadata or an image file storing metadata not including capture date and time information, the electronic device may store, in the DB, final modification time information about the image file, instead of the capture date and time information about the image file. If requested to display the image file by the user, the electronic device may provide the user with image files sorted based on the capture date and time information about the image files stored in the DB and/or the final modification time information about the image files.

### [Disclosure]

### [Technical Problem]

However, in the case of an image file having a file format incapable of storing metadata or an image file storing metadata not including capture date and time information, the modification time of the image file stored in the DB may be modified whenever the image file is modified. Accordingly, in the case of an image file having a file format incapable of storing metadata or an image file storing metadata not including capture date and time information, when requested to display the image file by the user, the electronic device cannot but to provide the user with image files sorted based on the changed modification time.

Embodiments of the disclosure provide a method and apparatus to automatically generate capture date and time information about an image file not storing metadata or an image file not including capture date and time information in metadata and provide the user with image files stored based on the same capture date and time information not affected by modification of the image file.

### [Technical Solution]

According to various example embodiments, an electronic device may comprise: a memory including a database configured to manage metadata of an image file and a file system, a display, and a processor configured to: based on identifying a request for detection of information about the image file, read the image file and detect the information, based on identifying that the image file whose information is detected is a first image file not storing metadata, generate final modification time information about the first image file stored in the file system as capture date and time information about the first image file, store the generated capture date and time information, as file information about the first image file managed in the file system, and store the capture date and time information stored as the file information about the first image file in the file system, as the capture date and time information about the first image file, in the database.

According to various example embodiments, a method for generating additional information about a file in an electronic device may comprise: based on identifying a request for detection of information about an image file, reading the image file and detecting the information, based on identifying that the image file whose information is detected is a first image file not storing metadata, generating final modification time information about the first image file stored in a file system of the electronic device as capture date and time information about the first image file, storing the generated capture date and time information, as file information about the first image file managed in the file system, and storing the capture date and time information stored as the file information about the first image file in the file system, as the capture date and time information about the first image file, in a database configured to manage the metadata of the image file.

### [Advantageous Effects]

According to various example embodiments, it is possible to automatically generate capture date and time information about an image file not storing metadata or an image file not including capture date and time information in metadata and provide the user with image files stored based on the same capture date and time information not affected by modification of the image file.

Further, it is possible to provide the user with image files sorted based on the same capture date and time information set by the user according to providing of a user interface (UI) in which capture date and time information about the image file not storing the metadata or image file not including the capture date and time information in the metadata may be generated or modified by the user.

Other various effects may be provided directly or indirectly in the disclosure.

### [Description of the Drawings]

The above and other aspects, features and advantages of certain embodiments of the present disclosure will be more apparent from the following detailed description, taken in conjunction with the accompanying drawings, in which:
FIG. 1 is a block diagram illustrating an example electronic device in a network environment according to various embodiments;
FIG. 2 is a block diagram illustrating an example configuration of an electronic device according to various embodiments;
FIG. 3 is a diagram illustrating an example file system and a DB stored in a memory of an electronic device according to various embodiments;
FIG. 4 is a diagram illustrating an example operation of generating capture date and time information about an image file in an electronic device according to various embodiments;
FIGS. 5A and 5B are diagrams illustrating an example operation of generating capture date and time information about an image file in an electronic device according to various embodiments;
FIGS. 6A, FIG 6B and FIG 6C are diagrams illustrating an example operation of generating capture date and time information about an image file in an electronic device according to various embodiments;
FIG. 7 is a diagram illustrating an example operation of generating capture date and time information about an image file in an electronic device according to various embodiments;
FIG. 8 is a flowchart illustrating an example operation of generating capture date and time information about an image file in an electronic device according to various embodiments;
FIG. 9 is a flowchart illustrating an example operation of generating capture date and time information about an image file in an electronic device according to various embodiments;
FIG. 10 is a flowchart illustrating an example operation of generating capture date and time information about an image file in an electronic device according to various embodiments;
FIG. 11 is a flowchart illustrating an example operation of generating capture date and time information about an image file in an electronic device according to various embodiments; and
FIG. 12 is a flowchart illustrating an example operation of generating capture date and time information about an image file in an electronic device according to various embodiments.

### [Mode for Invention

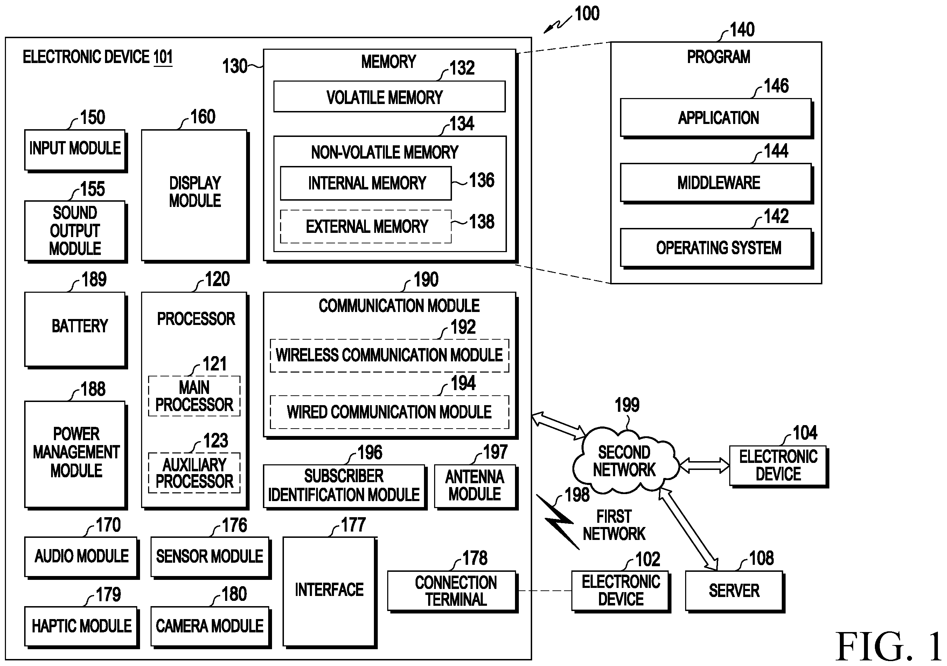

FIG. 1 is a block diagram illustrating an example electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

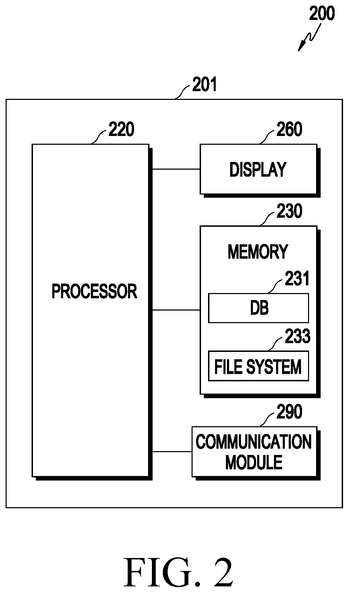

FIG. 2 is a block diagram 200 illustrating an example configuration of an electronic device according to various embodiments.

Referring to FIG. 2, according to various embodiments, an electronic device 201 (e.g., the electronic device 101 of FIG. 1) may include a processor (e.g., including processing circuitry) 220 (e.g., the processor 120 of FIG. 1), a memory 230 (e.g., the memory 130 of FIG. 1), a display 260 (e.g., the display module 160 of FIG. 1), and a communication module (e.g., including communication circuitry) 290 (e.g., the communication module 290 of FIG. 1).

According to various embodiments, the processor 220 may include various processing circuitry and identify a request for detection of information about an image file, upon identifying that the image file whose information is detected is a first image file not storing metadata, generate capture date and time information about the first image file, and store the generated capture date and time information, as file information managed in a file system (233) of the memory (230).

According to an embodiment, when an image file is generated in the electronic device 201 or the electronic device 201 is powered on after powered off, the processor 220 may identify it as the request for detection of information about the image file.

According to an embodiment, the first image file not storing metadata may refer, for example, to an image file having a file format not storing metadata and may represent, e.g., a graphics interchange format (gif) file and/or a portable network graphics (png) file.

According to an embodiment, upon identifying the request for detection of information about the image file, the processor 220 may read the image file and detect the information and, upon identifying that the image file whose information is detected is the first image file not storing metadata, detect the final modification date and time information about the first image file stored in the file system 233 and generate the detected final modification date and time information about the first image file, as the capture date and time information about the first image. For example, as a new image file is generated, and the generated new file is stored in the file system 233, upon identifying the request for detection of information about the image file, the processor 220 may read the new image file and detect the information. The processor 220 may identify whether the new image file stores metadata and, if the new image file does not store metadata, identify that the new image file is a first image file not storing metadata. The processor 220 may detect the creation date and time of the first image file which is the final modification date and time information about the first image file stored in the file system 233 and generate the detected creation date and time of the first image file, as the capture date and time information about the first image file.

According to an embodiment, if generating the capture date and time information about the first image file, the processor 220 may store the generated capture date and time information about the first image file, as file information about the first image file managed in the file system 233. Since the first image file has a file format in which metadata may not be stored, the processor 220 may store the generated capture date and time information about the first image file, as file information about the first image managed in the file system 233, not the first image file.

According to an embodiment, the file information about the image file managed in the file system 233 may be referred to as the structure stat, an additional field capable of including capture date and time information may be added to the structure and, as the capture date and time information about the first image file is stored in the additional field capable of storing the capture date and time information, the same capture date and time information may remain although the first image file is modified (e.g., edited or copied). For example, the processor 220 may add an additional field a1 capable of including the capture date and time information to the file stat as shown in Table 1 and store the capture date and time information about the first image.

**[Table 1]**

| |
|---|
| ```
 Structure state{
 mode_t st_mode; //file type and permission
 ino_t st_ino; // i-node number
 dev_t st_dev; //device number
 dev_t st_rdev; //device number of special file
 nlink_t st_nlink; //number of links
``` |
| ```
 uid_t st_uid; //owner's USER ID
 gid_t st_gid; //owner's GROUP ID
 off_t st_size; //number of bytes of regular file
 time_t st_atime; //last access time
 time_t st_mtime; //last modification time
 time_t st_ctime; //last state change time
 long st_blksize; //I/O block size
 long st _blocks; / /number of allocated blocks
 additional field; //capture date and time information (a1)
 };
``` |

According to an embodiment, the processor 220 may store the capture date and time information stored as file information about the first image file in the file system 233, as the capture date and time information about the first image file, in the DB 231 managing the metadata of the image file. As the processor 220 stores the capture date and time information stored as the file information about the first image file in the file system 233, as the capture date and time information about the first image file in the DB 231, the processor 220 may provide the first image file sorted based on the same capture date and time information stored in the DB 231 when image file display is requested by the user.

According to various embodiments, in the case of a first file (e.g., a document file) sorted based on the creation date and time information, the processor 220 may store the creation date and time information as the file information about the first file managed in the file system and, as the processor 220 stores it as the creation date and time information about the first file in the DB, provide the first file sorted based on the same creation date and time information stored in the DB when file display is requested by the user.

According to various embodiments, the processor 220 may identify a request for detection of information about the image file and, upon identifying the image file whose information is detected as a second image file not including capture date and time information in the metadata, generate capture date and time information about the second image file and store the generated capture date and time information about the second image file, as the metadata of the second image file.

According to an embodiment, when an image file is generated in the electronic device 201 or the electronic device 201 is powered on after powered off, the processor 220 may identify it as the request for detection of information about the image file.

According to an embodiment, in the case of an image file where metadata may be stored, the header of the image file may store metadata as shown in Table 2 below.

**[Table 2]**

| |
|---|
| . Date & Time: information about the date and time of capture of image file |
| . Camera Info: basic information about the camera, (camera model and/or maker) |
| . Camera Settings: camera settings information (focal length, whether flash used or not, aperture and/or shutter speed, etc.) |
| . Orientation: rotation/inversion information about the image. |
| . Geolocation: location information (GPS) |
| . Thumbnail: thumbnail information to be displayed on the camera monitor or file explorer |
| . Description: description of the image |
| . Copyright: information about artists and copyrights. |

According to an embodiment, the processor 220 may identify the image file not including capture date and time information (e.g., Date & Time) in the metadata, among the image files having the file format capable of storing metadata, as the second image file. For example, the processor 220 may identify the joint photographic experts group (jpeg) file, which does not including capture date and time information in the metadata, as the second image file. According to an embodiment, upon identifying the request for detection of information about the image file, the processor 220 may read the image file and detect the information and, upon identifying the image file whose information is detected as the second image file not including capture date and time information in the metadata, detect the final modification date and time information about the second image file stored in the file system 233 and generate the detected final modification date and time information about the second image file, as the capture date and time information about the second image file. For example, upon identifying a request for detection of information about the image file as a new image file is generated and stored in the file system 233, the processor 220 may read the new image file stored in the file system 233 and detect information, identify whether the metadata is stored in the new image file and, if the image file stores the metadata, identify whether the metadata includes capture date and time information. If the metadata of the new image file does not include the capture date and time information, the processor 220 may identify that the new image file is the second image file storing metadata not including capture date and time information. The processor 220 may detect the creation date and time of the second image file which is the final modification date and time information about the second image file stored in the file system 233 and generate the detected creation date and time of the second image file, as the capture date and time information about the second image file.

According to an embodiment, if generating the capture date and time information about the second image file, the processor 220 may further store the generated capture date and time information about the second image file, as metadata, in the header of the second image file.

According to an embodiment, the processor 220 may store the capture date and time information stored in the header of the second image file, as the capture date and time information about the second image file, in the DB 231 managing the metadata of the image file. As the processor 220 stores the capture date and time information stored in the header of the second image file in the DB 231, the processor 220 may provide the second image file sorted based on the same capture date and time information stored in the DB 231 when image file display is requested by the user.

According to various embodiments, upon identifying a request for detection of information about the image file, the processor 220 may read the image file and detect information and, upon identifying the image file whose information is detected, as a third image file storing metadata including capture date and time information, store metadata including the capture date and time information about the third image file, as metadata of the third image file, in the DB 231 managing the metadata of the image file.

According to an embodiment, as the processor 220 stores the capture date and time information stored in the header of the third image file in the DB 231, the processor 220 may provide the third image file sorted based on the same capture date and time information stored in the DB 231 when image file display is requested by the user.

According to various embodiments, the processor 220 may provide, through the display 260, a list of at least one image file, whose capture date and time information is not stored, sorted based on the final modification time among at least one image file stored in the file system 233. The processor 220 may generate capture date and time information about the at least one image file included in the list based on a user input (e.g., gesture).

According to an embodiment, based on execution of an application related to the image file or a user's request, the processor 220 may search for at least one first image files where no metadata is present and/or second image file where capture date and time information is not present in the metadata, among the image files stored in the file system 233 and provide them in a list for generating capture date and time information.

According to an embodiment, the processor 220 may provide, through the display 260, the list including the first image file and/or the second image file sorted based on the final modification date and time of the first image file and/or the second image file stored in the DB 231 managing the metadata of the image file.

According to an embodiment, the processor 220 may identify selection of one image file by a first gesture among the first image file and/or the second image file included in the list, identify that the location of the image file selected by the first gesture is changed by a second gesture, and store the date and time corresponding to the changed location, as the capture date and time information about the image file. For example, upon detecting a long touch gesture to the image file disposed in an area corresponding to the final modification date information of May 14, 2014, of the first image file and/or the second image file included in the list, the processor 220 may identify selection of the image file and, upon identifying that the location of the image file selected by the long touch gesture is changed to the area corresponding to the final date information of February 9, 2014 through a drag-and-drop gesture, generate the capture date information about the image file, as February 9, 2014.

According to an embodiment, when the image file whose capture date and time information is generated through the first gesture (e.g., long touch) and the second gesture (e.g., drag-and-drop) is the first image file incapable of storing metadata, the processor 220 may store the capture date and time information about the first image file as file information about the first image file managed in the file system 233. The processor 220 may store the capture date and time information about the first image file, stored as file information about the first image file in the file system 233, as the metadata the first image file, in the DB 231 managing the metadata of the image file.

According to an embodiment, when the image file whose capture date and time information is generated through the first gesture (e.g., long touch) and the second gesture (e.g., drag-and-drop) is the second image file storing metadata not including capture date and time information, the processor 220 may additionally store the capture date and time information about the second image file, as metadata, in the header of the second image file. The processor 220 may store metadata including the capture date and time information stored in the header of the second image file, as metadata of the second image file, in the DB 231 managing the metadata of the image file.

According to various embodiments, when the date and time information included in the metadata of at least one third image file storing the metadata including the capture date and time information does not match the capture date and time information included in the file name, the processor 220 may provide a UI for displaying a recommendation menu capable of changing the capture date and time information.

According to an embodiment, according to execution of an application related to the image file or the user's request, the processor 220 may detect the third image file having the file name including the date and time information among at least one third image file storing the metadata including the capture date and time information in the file system 233. The processor 220 may detect the third image file where the date and time information included in the metadata does not match the date and time information included in the file name of the third image file, among the third image files having the file name including the capture date and time information.

According to an embodiment, upon detecting the third image file where the date and time information included in the metadata does not match the date and time information included in the file name, the processor 220 may provide a recommendation menu capable of changing the capture date and time information present in the metadata into the capture date and time information included in the file name. When an image file is generated, the file name includes normal date and time information, but wrong capture date and time information may be included in the metadata of the image file. Thus, the processor 220 may provide the recommendation menu capable of changing the capture date and time information present in the metadata into the date and time information included in the file name, for the third image file where the date and time information included in the metadata does not match the date and time information included in the file name. For example, when the metadata of the third image file includes the capture date and time information, such as "14:00 May 17, 2021," and the file name of the third image file is "DSC_20200517093437.jpg," the processor 220 may provide a recommendation menu capable of changing the capture date and time information, such as "14:00 May 17, 2021," included in the metadata of the third image file into "9:34:37 May 17, 2020."

According to an embodiment, if the capture date and time information about the third image file is changed, the processor 220 may store the changed capture date and time information, as metadata, in the header of the third image file and store the metadata including the changed capture date and time information, as metadata of the third image file, in the DB 231 managing the metadata of the image file.

According to an embodiment, upon detecting the third image file where the date and time information included in the metadata does not match the date and time information included in the file name of the third image file, the processor 220 may provide a menu capable of changing the date and time information included in the file name into the capture date and time information present in the metadata. When an image file is generated, the file name includes wrong date and time information, but normal capture date and time information may be included in the metadata of the image file. Thus, the processor 220 may provide an option capable of displaying a recommendation menu capable of changing the date and time information included in the file name into the capture date and time information present in the metadata, for the third image file where the date and time information included in the metadata does not match the date and time information included in the file name.

According to various embodiments, the processor 220 may generate the capture date and time information about the image file selected by the user among at least one image file not storing capture date and time information among at least one image file stored in the file system 233, as the user's input information.

According to an embodiment, according to execution of an application related to the image file or a user's request, the processor 220 may search for at least one first image files where no metadata is present and/or second image file where capture date and time information is not present in the metadata, among the image files stored in the file system 233 and provide them in a list.

According to an embodiment, upon identifying the user's selection of an image file among the first image file and/or the second image file provided in the list, the processor 220 may provide menus capable of generating capture date and time information about the selected image file based on the user's input information. For example, upon receiving, as the user's input information, information about the location and time when the selected image file has been captured among the menus capable of generating the capture date and time information about the selected image file based on the user's input information, the processor 220 may generate the capture date and time information about the selected image file based on the capture date and time information corresponding to the user's input information.

According to an embodiment, when the image file whose capture date and time information is generated based on the user's input information is the first image file incapable of storing metadata, the processor 220 may store the capture date and time information about the first image file generated based on the user's input information as file information about the first image file managed in the file system 233. The processor 220 may store the capture date and time information about the first image file, stored as file information about the first image file in the file system 233, as the metadata the first image file, in the DB 231 managing the metadata of the image file.

According to an embodiment, when the image file whose capture date and time information is generated based on the user's input information is the second image file storing metadata not including capture date and time information, the processor 220 may additionally store the capture date and time information about the second image file generated based on the user's input information, as metadata, in the header of the second image file. The processor 220 may store metadata including the capture date and time information stored in the header of the second image file, as metadata of the second image file, in the DB 231 managing the metadata of the image file.

According to various embodiments, the memory 230 may be implemented to be substantially the same or similar to the memory 130 of FIG. 1.

According to an embodiment, the memory 230 may store the DB 231 and the file system 233 that manage the metadata of image files.

According to an embodiment, the DB 231 may store the metadata of each of at least one image file stored in the file system 233.

According to an embodiment, when requested to detect information about an image file, if the image file is an image file storing metadata, metadata including the capture date and time information stored in the header of the image file may be stored in the DB 231.

According to an embodiment, when requested to detect information about an image file, if the identified is a first image file not storing metadata, the capture date and time information stored as file information about the first image file in the file system 233 may be stored, as metadata of the first image file, in the DB 231.

According to an embodiment, when requested to display the image file by the user, at least one image file stored in the file system 233 may be sorted and displayed based on the capture date and time information of the metadata stored in the DB 231.

According to an embodiment, the file system 233 may store at least one image file and file information about each of the at least one image file, and the file information may be defined as a structure and stored.

According to an embodiment, in the file system 233, an additional field capable of storing the capture date and time information about the first image file not storing metadata may be added to the file information about the first image file managed in the file system 233.

According to various embodiments, the display 260 may be implemented in substantially the same or similar manner to the display module 160 of FIG. 1.

According to an embodiment, according to the user's selection and/or input, the display 260 may display a UI capable of generating metadata including the capture date and time information about at least one image file.

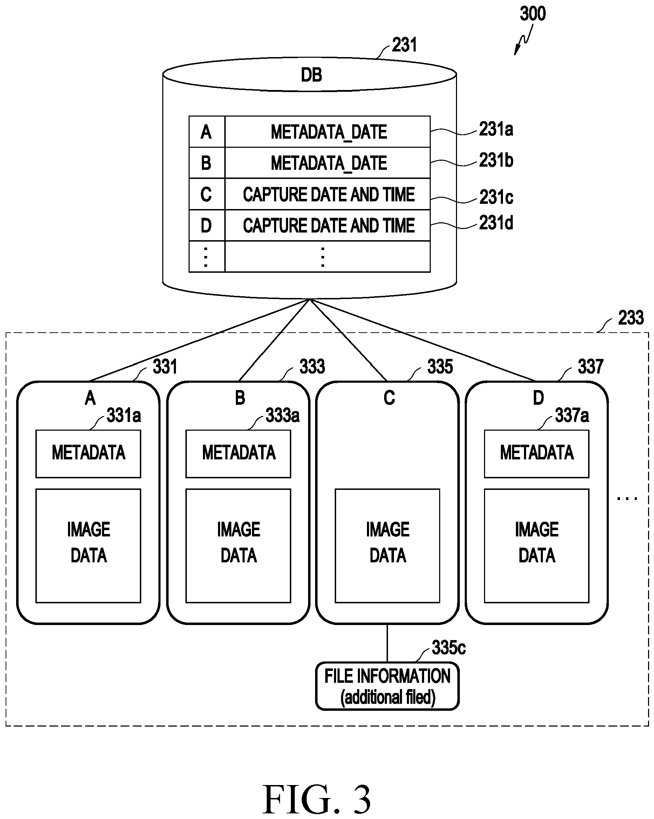

FIG. 3 is a diagram 300 illustrating an example file system and a DB stored in a memory of an electronic device according to various embodiments.

Referring to FIG. 3, according to various embodiments, an electronic device (e.g., the electronic device 101 of FIG. 1 and/or the electronic device 201 of FIG. 2) may store metadata for each of a plurality of image files 331, 333, 335, 337,... stored in the file system 233, in the DB 231 for managing metadata of image files.

According to various embodiments, the electronic device (e.g., the electronic device 101 of FIG. 1 and/or the electronic device 201 of FIG. 2) may store the plurality of image files 331, 333, 335, 337,... and file information about each of the plurality of image files in the file system 233.

According to an embodiment, according to a request for detection of information about the image file, upon identifying generation of image file A1 331 and image file B 333, the electronic device may identify whether metadata is stored in each of image file A 331 and image file B 333 stored in the file system 233 and, if metadata 331a is stored in the header of image file A 331 and metadata 333a is stored in the header of image file B 333, identify whether capture date and time information is included in each of the metadata 331a and the metadata 333a. Upon identifying that capture date and time information is included in each of the metadata 331a and the metadata 333a, the electronic device may identify image file A 331 and image file B 333 as third image files including capture date and time information in the metadata. The electronic device may store the metadata 331a, including the capture date and time information in one row 231a of the DB 231, as the metadata of image file A 331. The electronic device may store the metadata 333a, including the capture date and time information in one row 231b of the DB 231, as the metadata of image file B 333.

According to an embodiment, according to a request for detection of information about the image file, upon identifying generation of image file C 335, the electronic device may identify whether metadata is stored in image file C 335 stored in the file system 233 and, upon identifying that metadata is not stored in image file C 335, identify image file C 335 as a first image file (e.g., a gif file or png file) having a file format where metadata is not stored. The electronic device may detect the final modification date and time information about image file C 335 stored in the file system 233 and generate the detected final modification date and time information about image file C 335, as capture date and time information about image file C 335. The electronic device may store the generated capture date and time information about the image file in an additional field capable of storing the capture date and time information included in the file information 335c about image file C 335 managed in the file system 233. The electronic device may store the capture date and time information stored in the additional field included in the file information 335c about image file C 335 managed in the file system 233, as capture date and time information about image file C 335, in one row 231c of the DB 231.

According to an embodiment, according to a request for detection of information about the image file, upon identifying generation of image file D 337, the electronic device may identify whether metadata is stored in image file D 337 stored in the file system 233 and, if metadata 337a is stored in the header of image file D 337, identify whether capture date and time information is included in the metadata 337a. Upon identifying that capture date and time information is not included in the metadata 337a, the electronic device may identify image file D 337, as a second image file not including capture date and time information in the metadata. The electronic device may detect the final modification date and time information about image file D 337 stored in the file system 233 and generate the detected final modification date and time information, as capture date and time information about image file D 337. The electronic device may additionally store the generated capture date and time information about the image file, as metadata 337a, in the header of image file D 337. The electronic device may store the capture date and time information stored as the metadata of image file D 337, as capture date and time information about image file D 337, in one row 231d of the DB 231.

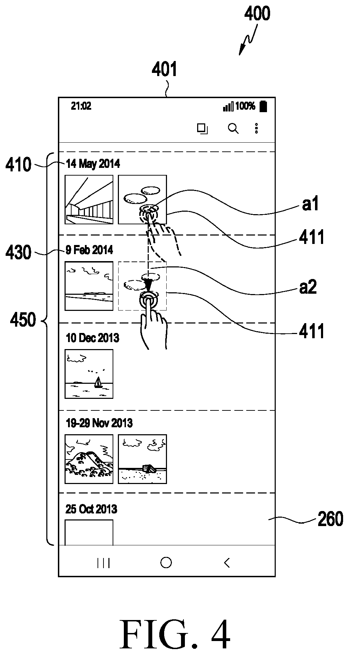

FIG. 4 is a diagram 400 illustrating an example operation of generating capture date and time information about an image file in an electronic device according to various embodiments.

Referring to FIG. 4, an electronic device 401 (e.g., the electronic device 101 of FIG. 1 and/or the electronic device 201 of FIG. 2) may search for at least one first image file not including metadata and/or a second image file not including capture date and time information in metadata among image files stored in a file system (e.g., the file system 233 of FIGS. 2 and 3) according to a user's request or execution of an application (e.g., a gallery application) related to image files. The at least one searched first image file and/or second image file may be sorted based on the final modification time. The electronic device 401 may display, on the display 260, a list 450 including the searched first image file and/or second image file sorted based on the final modification time of the searched first image file and/or second image file. The electronic device 401 may provide the list 450 including the first image file and/or the second image file sorted based on the final modification date and time of the first image file and/or the second image file stored in the DB (e.g., the DB 231 of FIGS. 2 and 3) managing the metadata of image files.

Upon detecting a long touch a1 indicating a first gesture to the image file 411 disposed in an area 410 corresponding to the final modification date information of May 14, 2014, of the first image file and/or the second image file included in the list 450, the electronic device 401 may identify selection of the image file 411 and, upon identifying that the location of the image file 411 selected by the long touch a1 is changed to the area 430 corresponding to the final date information of February 9, 2014 through a drag-and-drop a2 indicating a second gesture, generate the capture date information about the image file 411, as February 9, 2014.

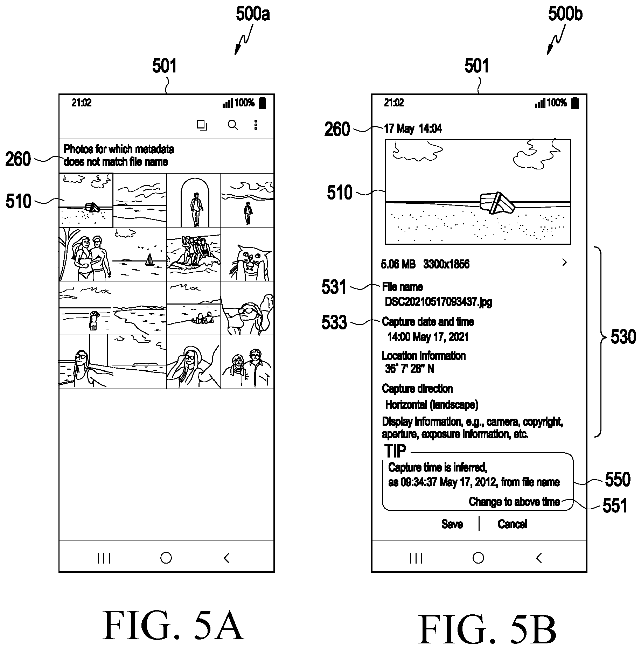

FIGS. 5A and 5B are diagrams 500a and 500b illustrating an example operation of generating capture date and time information about an image file in an electronic device according to various embodiments.

Referring to FIG. 5A, an electronic device 501 (e.g., the electronic device 101 of FIG. 1 and/or the electronic device 201 of FIG. 2) may detect a plurality of third image files where the date and time information included in the metadata does not match the date and time information included in the file name among at least one third image file stored in the metadata including capture date and time information in the file system (e.g., the file system 233 of FIGS. 2 and 3). The electronic device 501 may control the display 260 to display a list including the plurality of third image files where the date and time information included in the metadata does not match the date and time information included in the file name. The electronic device 501 may identify selection of an image file 510 among the plurality of third image files included in the list.

Referring to FIG. 5B, upon identifying selection of the image file 510 among the plurality of third image files included in the list, the electronic device 501 may control the display 260 to display the image file 510, metadata 530 of the image file, and/or a recommendation menu 550 . Upon identifying "14:00 May 17, 2021," which is the capture date and time information 533 included in the metadata 530 of the image file 510 and "DSC_20210517093437.jpg" which is the file name 531 of the image file 510, the electronic device 501 may provide a recommendation menu 550 that recommends to change the capture date and time information 533 included in the metadata 530 of the image file 510 into "9:34:37 May 17, 2021" detected from the file name 531 of the image file 510. Upon identifying selection 551 for changing the capture date and time information on the recommendation menu 550, the electronic device 501 may change the capture date and time information 533 about the image file 510 into "9:34:37 May 17, 2021" and store it.

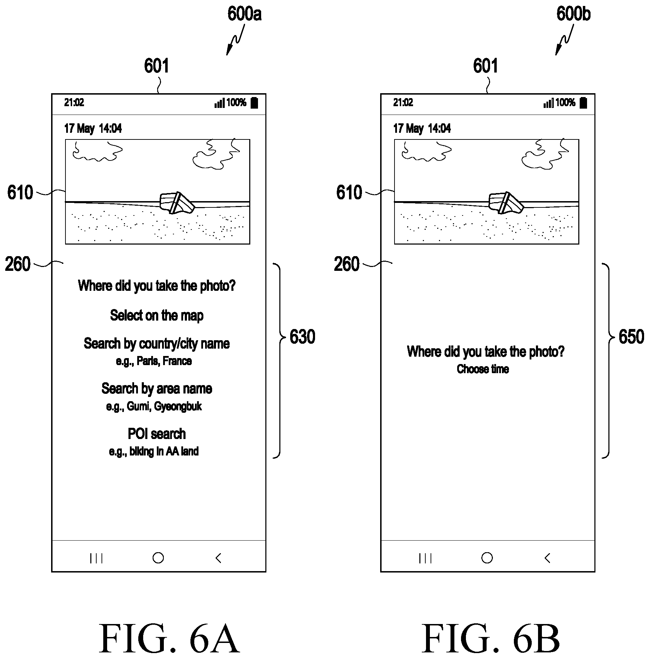

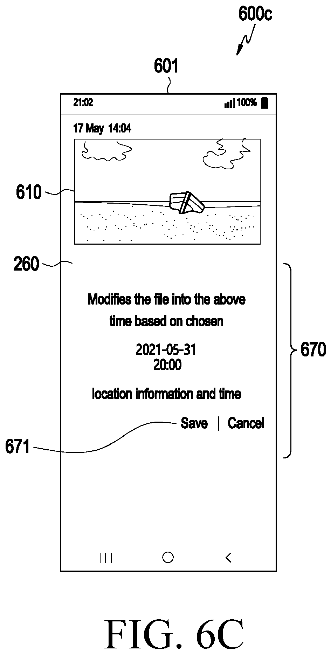

FIGS. 6A, FIG 6B and FIG 6C are diagrams 600a, 600b and 600c illustrating an example operation of generating capture date and time information about an image file in an electronic device according to various embodiments.

An electronic device 601 (e.g., the electronic device 101 of FIG. 1 and/or the electronic device 201 of FIG. 2) may search for at least one first image file not including metadata and/or a second image file not including capture date and time information in metadata among image files stored in a file system (e.g., the file system 233 of FIGS. 2 and 3) according to a user's request or execution of an application (e.g., a gallery application) related to image files and provide the results in a list. The electronic device 601 may identify selection of the image file 610 from the list including the first image file and/or the second image file.

Referring to FIG. 6A, upon identifying selection of the image file 610 from the list, the electronic device 601 may control the display 260 to display a first menu 630 capable of inputting location information among menus capable of generating capture date and time information about the image file 610 based on the user's input information. Upon identifying completion of the user's input information indicating the location information on the first menu 630, the electronic device 601 may display, on the display 260, a second menu 650 capable of inputting time information among the menus capable of generating the capture date and time information about the image file 610.

Referring to FIG. 6B, upon identifying completion of the user's input information indicating location information through the first menu 630, the electronic device 601 may, control the display 260 to display the second menu 650 capable of inputting time information among the menus capable of generating capture date and time information about the image file 610. Upon identifying completion of the user's input information indicating time information on the second menu 650, the electronic device 601 may generate capture date and time information about the image file 610 generated based on the user's input information indicating the location information input through the first menu 630 and the user's input information indicating the time information input through the second menu 650.

Referring to FIG. 6C, the electronic device 601 may generate "20:00 May 31, 2021" which is the capture date and time information 670 about the image file 610 using an offset time (e.g., GMT+9) based on the user's input information indicating the location information input through the first menu 630 and the time information (e.g., universal time, coordinated (utc) time information) input through the second menu 650 and control the display 260 to display it. If save 671 is selected, the electronic device 601 may store "20:00 May 31, 2021" which is the capture date and time information, as the capture date and time information about the image file 610.

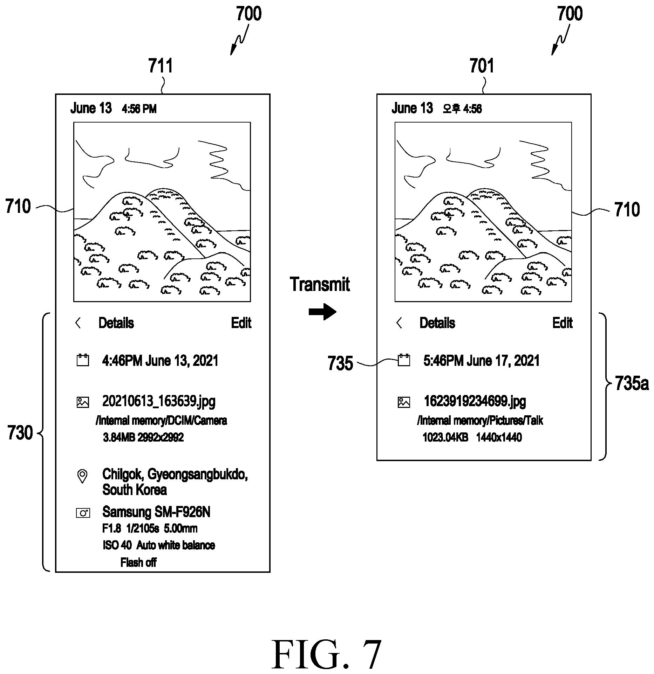

FIG. 7 is a diagram 700 illustrating an example operation of generating capture date and time information about an image file in an electronic device according to various embodiments.

Referring to FIG. 7, upon receiving an image file 710 from an external electronic device 711 through a communication module (e.g., the communication module 290 of FIG. 2), an electronic device 701 (e.g., the electronic device 101 of FIG. 1 and/or the electronic device 201 of FIG. 2) may store the image file 710 in the file system (e.g., the file system 233 of FIGS. 2 and 3) of the electronic device 701, with the metadata 730 stored in the header of the image file 710 deleted. For example, when the image file may be received in normal quality through a messenger application, the image file with the metadata deleted may be received and stored. As a new image file 710 is stored in the file system (e.g., the file system 233 of FIGS. 2 and 3), the electronic device 701 may read the image file 710 and detect information, and identify that the image file 710 whose information has been detected is an image file (e.g., a jpg file) having a file format where metadata may be stored. The electronic device 701 may generate the final modification time, e.g., the downloaded time "5:46 June 17, 2021," about the image file 710 stored in the file system, as the capture date and time information 735a. The electronic device 701 may store "5:46 June 17, 2021,"which is the generated capture date and time information 735a as the metadata 735 of the image file 710.

According to various example embodiments, an electronic device (e.g., the electronic device 201 of FIG. 2) may comprise: a memory (e.g., the memory 230 of FIG. 2) including a database (DB) (e.g., the DB 231 of FIGS. 2 and 3) configured to manage metadata of an image file and a file system (e.g., the file system 233 of FIGS. 2 and 3), a display (e.g., the display 260 of FIG. 2), and/or a processor (e.g., the processor 220) configured to: based on identifying a request for detection of information about the image file, read the image file and detect the information, based on identifying that the image file whose information is detected is a first image file not storing metadata, generate final modification time information about the first image file stored in the file system as capture date and time information about the first image file, store the generated capture date and time information as file information about the first image file managed in the file system, and store the capture date and time information stored as the file information about the first image file in the file system as the capture date and time information about the first image file, in the DB.

According to various example embodiments, the processor may be configured to additionally store the capture date and time information in the file information about the first image file comprising a structure in the file system.

According to various example embodiments, the processor may be configured to, based on identifying that the image file whose information is detected is a second image file not including capture date and time information in metadata, generate final modification time information about the second image file stored in the file system as capture date and time information about the second image file, store the generated capture date and time information as metadata of the second image file, and store the capture date and time information stored as the metadata of the second image file as the capture date and time information about the second image file in the DB.

According to various example embodiments, the processor may be configured to identify generation of the image file or turn-on of the electronic device after being turned off, as the request for detection of information about the image file.

According to various example embodiments, the processor may be configured to, based on identifying the image file whose information is detected as a third image file including capture date and time information in metadata, store the metadata of the third image file in the DB.

According to various example embodiments, the processor may be configured to: search for at least one image file of at least one first image file not storing metadata or at least one second image file not including capture date and time information in metadata and provide the at least one image file in a list, based on a location of an image file selected from the list by a first gesture being changed by a second gesture, generate a date and time corresponding to the changed location as capture date and time information about the image file, and store the generated capture date and time information, as the capture date and time information about the image file or metadata of the image file.

According to various example embodiments, the processor may be configured to provide the list including at least one image file of the at least one first image file or the at least one second image file sorted based on a final modification date and time of the first image file or the second image file stored in the DB configured to manage the metadata of the image file.

According to various example embodiments, the processor may be configured to, based on detecting a third image file where capture date and time information included in metadata does not match date and time information included in a file name among at least one third image file including the capture date and time information in the metadata, provide a recommendation menu capable of changing the capture date and time information included in the metadata into the date and time information included in the file name.

According to various example embodiments, the processor may be configured to, based on the capture date and time information included in the metadata not matching the date and time information included in the file name, provide a recommendation menu capable of changing the date and time information included in the file name into the capture date and time information included in the metadata.

According to various example embodiments, the processor may be configured to: search for at least one image file of at least one first image file not including metadata or at least one second image file not including capture date and time information in metadata and provide the at least one image file in a list and, based on identifying selection of an image file from the list, provide a menu capable of generating metadata of the selected image file based on input information.

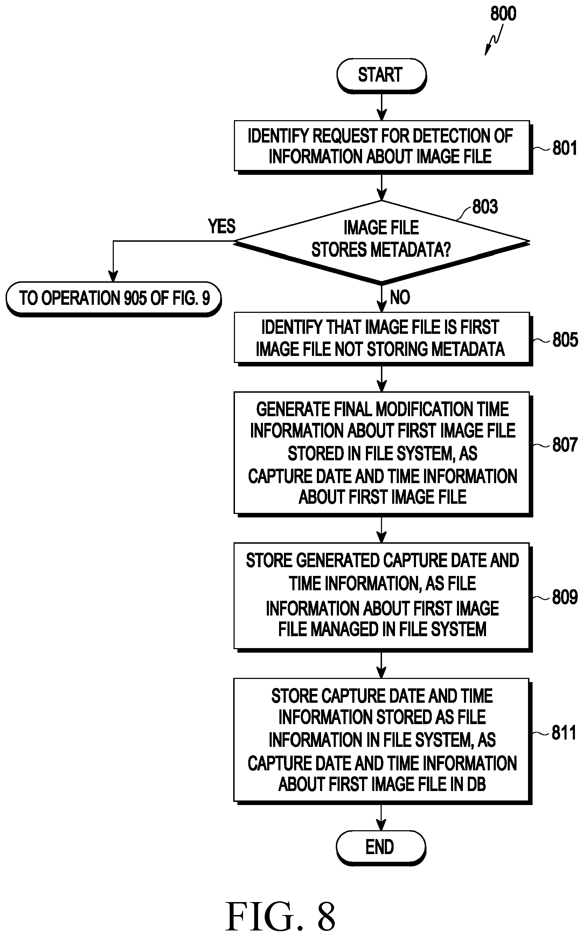

FIG. 8 is a flowchart 800 illustrating an example operation of generating capture date and time information about an image file in an electronic device according to various embodiments. Operations of generating capture date and time information about the image file may include operations 801 to 811. According to an embodiment, at least one of operations 801 to 811 may be omitted or changed in order or may add other operations. The operations of generating the capture date and time information about the image file may be performed by the electronic device 101 of FIG. 1, the processor 120 of FIG. 1, the electronic device 201 of FIG. 2, or the processor 220 of FIG. 2.

In operation 801, the electronic device 201 may identify a request for detection of information about the image file.

According to an embodiment, when an image file is generated in the electronic device 201 or the electronic device is powered on after powered off, the electronic device 201 may identify it as the request for detection of information about the image file. The electronic device may detect the information by reading the image file according to a request for detection of information about the image file.

In operation 803, the electronic device 201 may identify whether the image file stores metadata.

According to an embodiment, the electronic device may identify whether the image file whose information is detected according to the request for detection of information about the image file stores the metadata. Upon identifying that the image file does not store metadata in operation 803, the electronic device 201 may identify that the image file is a first image file not storing metadata in operation 805.

According to an embodiment, the first image file not storing metadata represents an image file having a file format not storing metadata and may represent, e.g., a gif file and/or a png file.

In operation 807, the electronic device 201 may generate the final modification time information about the first image file stored in the file system 233, as capture date and time information about the first image file.

According to an embodiment, the electronic device 201 may detect the final modification date and time of the first image file stored in the file system (e.g., the file system 233 of FIGS. 2 and 3) and generate the detected final modification date and time (e.g., information about the date and time when the first image file is generated) of the first image file, as the capture date and time information about the first image file.

In operation 809, the electronic device 201 may store the generated capture date and time information as file information about the first image file managed in the file system (e.g., the file system 233 of FIGS. 2 and 3).

According to an embodiment, if generating the capture date and time information about the first image file, the electronic device 201 may store the generated capture date and time information about the first image file, as file information about the first image file managed in the file system. The electronic device 201 may store the generated capture date and time information about the first image file, as file information about the file system where information is not changed although the first image file is modified.

According to an embodiment, the file information about the image file managed in the file system may be defined as a structure stat, add a "date-taken" field to the structure, and store the capture date and time information about the first image file in the "date-taken" field.

In operation 811, the electronic device 201 may store the capture date and time information, stored as file information in the file system (e.g., the file system 233 of FIGS. 2 and 3), as the capture date and time information, in the DB (e.g., the DB 231 of FIGS. 2 and 3).

According to an embodiment, the electronic device 201 may store the capture date and time information stored as file information about the first image file in the file system, as the capture date and time information about the first image file, in the DB managing the metadata of the image file.

According to an embodiment, as the electronic device 201 stores the capture date and time information stored as the file information about the first image file in the file system, as the capture date and time information about the first image file in the DB, the electronic device 201 may provide the first image file sorted based on the same capture date and time information stored in the DB when image file display is requested by the user.

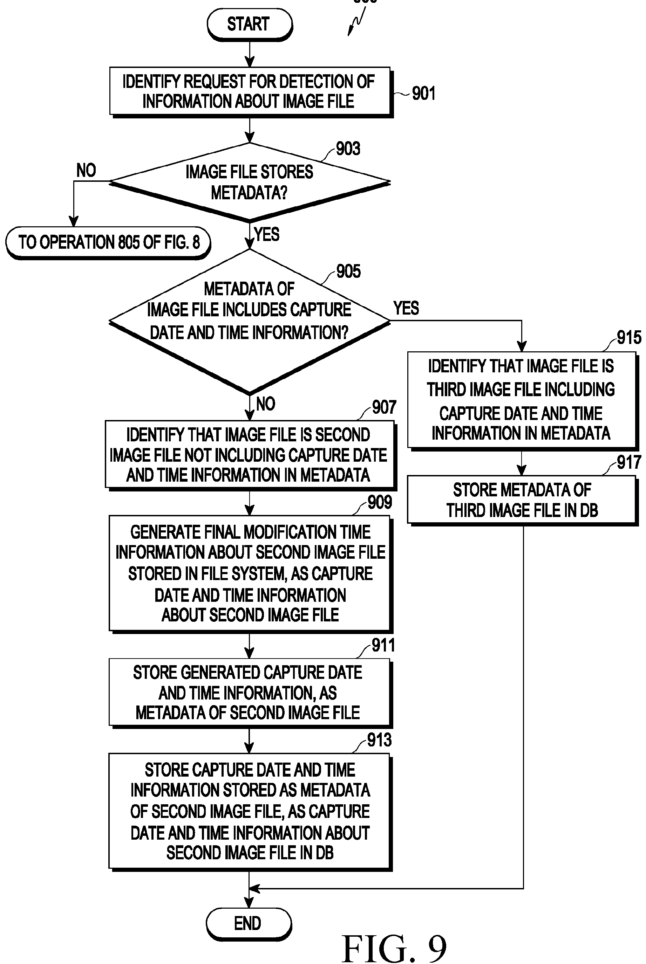

Upon identifying that the image file stores metadata in operation 803, the electronic device 201 may perform operation 905 of FIG. 9.

FIG. 9 is a flowchart 900 illustrating an example operation of generating capture date and time information about an image file in an electronic device according to various embodiments. Operations of generating capture date and time information about the image file may include operations 901 to 913. According to an embodiment, at least one of operations 901 to 913 may be omitted or changed in order or may add other operations. The operations of generating the capture date and time information about the image file may be performed by the electronic device 101 of FIG. 1, the processor 120 of FIG. 1, the electronic device 201 of FIG. 2, or the processor 220 of FIG. 2.

In operation 901, the electronic device 201 may identify a request for detection of information about the image file.

According to an embodiment, when an image file is generated in the electronic device 201 or the electronic device is powered on after powered off, the electronic device 201 may identify it as the request for detection of information about the image file. The electronic device may detect the information by reading the image file according to a request for detection of information about the image file.

In operation 903, the electronic device 201 may identify whether the image file stores metadata.

According to an embodiment, the electronic device may identify whether the image file whose information is detected according to the request for detection of information about the image file stores the metadata.

Upon identifying that the image file stores metadata in operation 903, the electronic device 201 may identify whether the metadata of the image file includes capture date and time information in operation 905.

Upon identifying that the metadata of the image file does not include capture date and time information in operation 905, the electronic device 201 may identify that the image file is a second image file not including capture date and time information in the metadata in operation 907.

According to an embodiment, the electronic device 201 may identify the image file not including capture date and time information (e.g., Date & Time) in the metadata, among the image files having the file format capable of storing metadata, as the second image file. For example, the electronic device 201 may identify the jpeg file, which does not including capture date and time information in the metadata, as the second image file.

In operation 909, the electronic device 201 may generate the final modification time information about the second image file stored in the file system (e.g., the file system 233 of FIGS. 2 and 3), as capture date and time information about the second image file.

According to an embodiment, the electronic device 201 may detect the final modification date and time information (e.g., information about the date and time when the second image file is generated) about the second image file stored in the file system and generate the detected final modification date and time information about the second image file, as capture date and time information about the second image file.

In operation 911, the electronic device 201 may store the generated capture date and time information as metadata of the second image file.

According to an embodiment, the electronic device 201 may further store the generated capture date and time information about the second image file, as metadata, in the header of the second image file.

In operation 913, the electronic device 201 may store the capture date and time information stored as the metadata of the second image file, as capture date and time information about the second image file in the DB (e.g., the DB 231 of FIGS. 2 and 3).

According to an embodiment, the electronic device 201 may store the capture date and time information stored in the header of the second image file, as the capture date and time information about the second image file, in the DB managing the metadata of the image file.

According to an embodiment, as the electronic device 201 stores the capture date and time information stored in the header of the second image file in the DB, the electronic device 201 may provide the second image file sorted based on the same capture date and time information stored in the DB when image file display is requested by the user.

Upon identifying that the metadata of the image file includes capture date and time information in operation 905, the electronic device 201 may identify that the image file is a third image file including the capture date and time information in the metadata in operation 915.

In operation 917, the electronic device 201 may store the metadata of the third image file in the DB (e.g., the DB 231 of FIGS. 2 and 3).

According to an embodiment, as the electronic device 201 stores the metadata including the capture date and time information stored in the header of the third image file in the DB, the electronic device 201 may provide the third image file sorted based on the same capture date and time information stored in the DB when image file display is requested by the user.

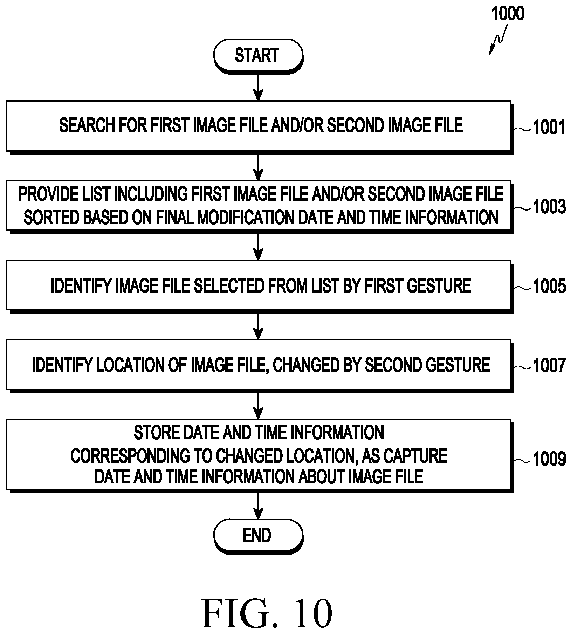

FIG. 10 is a flowchart 1000 illustrating an example operation of generating capture date and time information about an image file in an electronic device according to various embodiments. Operations of generating capture date and time information about the image file may include operations 1001 to 1009. According to an embodiment, at least one of operations 1001 to 1009 may be omitted or changed in order or may add other operations. The operations of generating the capture date and time information about the image file may be performed by the electronic device 101 of FIG. 1, the processor 120 of FIG. 1, the electronic device 201 of FIG. 2, or the processor 220 of FIG. 2.

In operation 1001, the electronic device 201 may search for the first image file and/or the second image file.

According to an embodiment, the electronic device 201 may search for at least one first image file not including metadata and/or a second image file not including capture date and time information in metadata among image files stored in a file system (e.g., the file system 233 of FIGS. 2 and 3) according to a user's request or execution of an application (e.g., a gallery application) related to image files.

In operation 1003, the electronic device 201 may provide a list including the first image file and/or second image file sorted based on the final modification date and time information.

According to an embodiment, the electronic device 201 may provide, through the display (e.g., the display 260 of FIG. 2), the list including the first image file and/or the second image file sorted based on the final modification date and time of the first image file and/or the second image file stored in the DB managing the metadata of the image file.

In operation 1005, the electronic device 201 may identify the image file selected by the first gesture from the list.

According to an embodiment, the electronic device 201 may identify selection of the image file by the first gesture (e.g., long touch) among the first image file and/or the second image file included in the list.

In operation 1007, the electronic device 201 may identify the location of the selected image file, changed by a second gesture.

According to an embodiment, the electronic device 201 may identify that the location of the image file selected by the first gesture (e.g., long touch) is changed by the second gesture (e.g., drag-and-drop).

In operation 1009, the electronic device 201 may store the date and time information corresponding to the changed location, as the capture date and time information about the image file.

According to an embodiment, the electronic device 201 may store the date and time information corresponding to the current location of the image file whose location has been changed by the second gesture (e.g., drag-and-drop), as the capture date and time information about the image file.

According to an embodiment, when the image file whose capture date and time information is generated through the first gesture (e.g., long touch) and the second gesture (e.g., drag-and-drop) is the first image file incapable of storing metadata, the electronic device 201 may store the capture date and time information about the first image file as file information about the first image file managed in the file system (e.g., the file system 233 of FIGS. 2 and 3).

According to an embodiment, the electronic device 201 may store the capture date and time information about the first image file, stored as file information about the first image file in the file system, as the metadata the first image file, in the DB (e.g., the DB 231 of FIGS. 2 and 3) managing the metadata of the image file.

According to an embodiment, when the image file whose capture date and time information is generated through the first gesture (e.g., long touch) and the second gesture (e.g., drag-and-drop) is the second image file storing metadata not including capture date and time information, the electronic device 201 may additionally store the capture date and time information about the second image file, as metadata, in the header of the second image file.

According to an embodiment, the electronic device 201 may store metadata including the capture date and time information stored in the header of the second image file, as metadata of the second image file, in the DB managing the metadata of the image file.

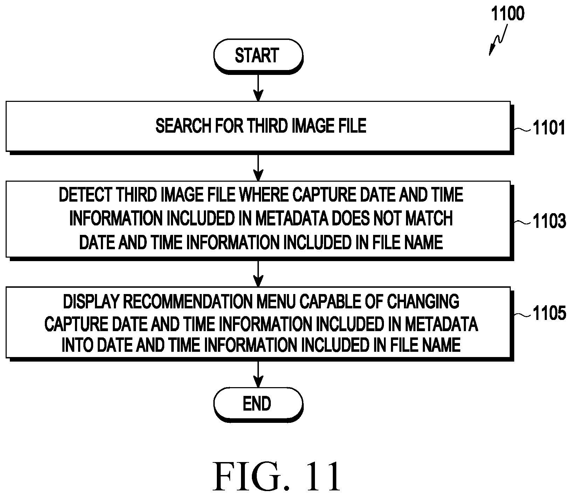

FIG. 11 is a flowchart 1100 illustrating an example operation of generating capture date and time information about an image file in an electronic device according to various embodiments. Operations of generating capture date and time information about the image file may include operations 1101 to 1105. According to an embodiment, at least one of operations 1101 to 1105 may be omitted or changed in order or may add other operations. The operations of generating the capture date and time information about the image file may be performed by the electronic device 101 of FIG. 1, the processor 120 of FIG. 1, the electronic device 201 of FIG. 2, or the processor 220 of FIG. 2.

In operation 1101, the electronic device 201 may search for a third image file.

According to an embodiment, the electronic device 201 may search for a third image file including capture date and time information in metadata among image files stored in a file system (e.g., the file system 233 of FIGS. 2 and 3) according to a user's request or execution of an application (e.g., a gallery application) related to image files.

In operation 1103, the electronic device 201 may detect the third image file where the capture date and time information included in the metadata does not match the date and time information included in the file name.

According to an embodiment, the electronic device 201 may detect the third image files having the file name including the date and time information among the searched third image files and detect the third image file where the date and time information included in the metadata does not match the date and time information included in the file name among the third image files having the file name including the date and time information.

In operation 1105, the electronic device 201 may display a recommendation menu capable of changing the capture date and time information included in the metadata into the date and time information included in the file name.

According to an embodiment, the electronic device 201 may provide a recommendation menu capable of changing the capture date and time information present in the metadata into the date and time information included in the file name.

According to an embodiment, if the capture date and time information about the third image file is changed according to selection on the recommendation menu, the electronic device 201 may store the changed capture date and time information, as metadata, in the header of the third image file and store the metadata including the changed capture date and time information, as metadata of the third image file, in the DB (e.g., the DB 231 of FIGS. 2 and 3) managing the metadata of the image file.

According to an embodiment, for the third image file where the date and time information included in the metadata does not match the date and time information included in the file name, the electronic device 201 may provide an option capable of displaying a recommendation menu capable of changing the date and time information included in the file name into the capture date and time information present in the metadata.

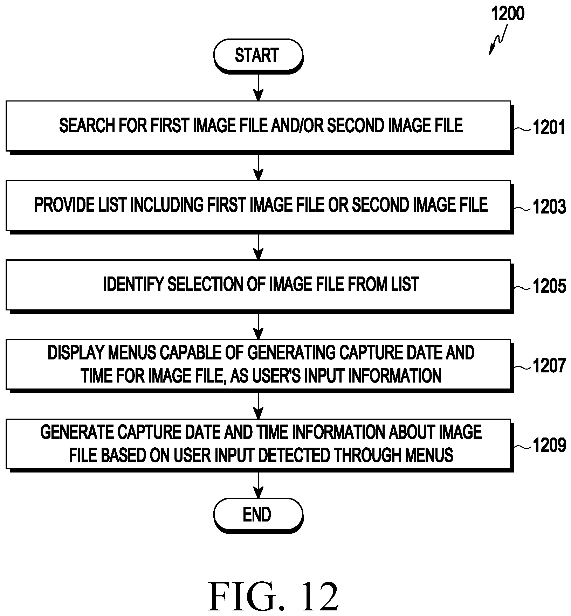

FIG. 12 is a flowchart 1200 illustrating an example operation of generating capture date and time information about an image file in an electronic device according to various embodiments. Operations of generating capture date and time information about the image file may include operations 1201 to 1209. According to an embodiment, at least one of operations 1201 to 1209 may be omitted or changed in order or may add other operations. The operations of generating the capture date and time information about the image file may be performed by the electronic device 101 of FIG. 1, the processor 120 of FIG. 1, the electronic device 201 of FIG. 2, or the processor 220 of FIG. 2.

In operation 1201, the electronic device 201 may search for the first image file and/or the second image file.

According to an embodiment, the electronic device 201 may search for at least one first image file not including metadata and/or a second image file not including capture date and time information in metadata among image files stored in a file system (e.g., the file system 233 of FIGS. 2 and 3) according to a user's request or execution of an application (e.g., a gallery application) related to image files.

In operation 1203, the electronic device 201 may provide a list including the first image file and/or the second image file.

In operation 1205, the electronic device 201 may identify selection of an image file from the list.

According to an embodiment, the electronic device 201 may identify selection of one image file by the user among the first image file and/or the second image file provided through the list.

In operation 1207, the electronic device 201 may display menus capable of generating the capture date and time information about the image file as the user's input information.

According to an embodiment, the electronic device 201 may display, on the display 260, a menu for generating the capture date and time information about the selected image file, as the user's input information.

According to an embodiment, the electronic device 201 may receive the user's input information corresponding to the information about the location and time when the selected image file has been captured through the menus capable of generating the capture date and time information about the selected image file based on the user's input information.

In operation 1209, the electronic device 201 may generate capture date and time information about the image file based on the user input detected through the menus.

According to an embodiment, the electronic device 201 may generate the capture date and time information about the selected image file based on the user's input information corresponding to the information about the location and time when the selected image file has been captured, received through the menus capable of generating the capture date and time information about the selected image file.

According to an embodiment, when the image file whose capture date and time information is generated based on the user's input information is the first image file incapable of storing metadata, the electronic device 201 may store the capture date and time information about the first image file generated based on the user's input information as file information about the first image file managed in the file system (e.g., the file system 233 of FIGS. 2 and 3).

According to an embodiment, the electronic device 201 may store the capture date and time information about the first image file, stored as file information about the first image file in the file system, as the metadata the first image file, in the DB (e.g., the DB 231 of FIGS. 2 and 3) managing the metadata of the image file.

According to an embodiment, when the image file whose capture date and time information is generated based on the user's input information is the second image file storing metadata not including capture date and time information, the electronic device 201 may additionally store the capture date and time information about the second image file generated based on the user's input information, as metadata, in the header of the second image file.

According to an embodiment, the electronic device 201 may store metadata including the capture date and time information stored in the header of the second image file, as metadata of the second image file, in the DB managing the metadata of the image file.

According to various example embodiments, a method for generating additional information about a file in an electronic device may comprise: based on identifying a request for detection of information about an image file, reading the image file and detecting the information, based on identifying that the image file whose information is detected is a first image file not storing metadata, generating final modification time information about the first image file stored in a file system of the electronic device as capture date and time information about the first image file, storing the generated capture date and time information as file information about the first image file managed in the file system, and storing the capture date and time information stored as the file information about the first image file in the file system as the capture date and time information about the first image file in a database (DB) configured to manage the metadata of the image file.

According to various example embodiments, the method may further comprise storing the capture date and time information in the file information about the first image file comprising a structure in the file system.

According to various example embodiments, the method may further comprise: based on identifying that the image file whose information is detected is a second image file not including capture date and time information in metadata, generating final modification time information about the second image file stored in the file system as capture date and time information about the second image file, storing the generated capture date and time information as metadata of the second image file, and storing the capture date and time information stored as the metadata of the second image file as the capture date and time information about the second image file in the DB.

According to various example embodiments, the method may further comprise identifying generation of the image file or turn-on of the electronic device after being turned off, as the request for detection of information about the image file.

According to various example embodiments, the method may further comprise: based on identifying the image file whose information is detected as a third image file including capture date and time information in metadata, storing the metadata of the third image file in the DB.

According to various example embodiments, the method may further comprise: searching for at least one image file of at least one first image file not storing metadata or at least one second image file not including capture date and time information in metadata and providing the at least one image file in a list, based on a location of an image file selected from the list by a first gesture being changed by a second gesture, generating a date and time corresponding to the changed location as capture date and time information about the image file, and storing the generated capture date and time information as the capture date and time information about the image file or metadata of the image file.

According to various example embodiments, the method may further comprise providing the list including at least one image file of the at least one first image file or the at least one second image file sorted based on a final modification date and time of the first image file or the second image file stored in the DB managing the metadata of the image file.

According to various example embodiments, the method may further comprise: based on detecting a third image file where capture date and time information included in metadata does not match date and time information included in a file name among at least one third image file including the capture date and time information in the metadata, providing a recommendation menu capable of changing the capture date and time information included in the metadata into the date and time information included in the file name.

According to various example embodiments, the method may further comprise: based on the capture date and time information included in the metadata not matching the date and time information included in the file name, providing a recommendation menu capable of changing the date and time information included in the file name into the capture date and time information included in the metadata.

According to various example embodiments, the method may further comprise: searching for at least one image file of at least one first image file not including metadata or at least one second image file not including capture date and time information in metadata and providing the at least one image file in a list and, based on identifying selection of an image file from the list, providing a menu capable of generating metadata of the selected image file based on input information.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device comprising:
a memory including a database (DB) configured to manage metadata of an image file and a file system;
a display; and
a processor configured to:
based on identifying a request for detection of information about the image file, read the image file and detect the information,
based on identifying that the image file whose information is detected is a first image file not storing metadata, generate final modification time information about the first image file stored in the file system as capture date and time information about the first image file,
store the generated capture date and time information, as file information about the first image file managed in the file system, and
store the capture date and time information stored as the file information about the first image file in the file system as the capture date and time information about the first image file in the DB.

2. The electronic device of claim 1, wherein the processor is configured to additionally store the capture date and time information in the file information about the first image file comprising a structure in the file system.

3. The electronic device of claim 1, wherein the processor is configured to:
based on identifying that the image file whose information is detected is a second image file not including capture date and time information in metadata, generate final modification time information about the second image file stored in the file system as capture date and time information about the second image file,
store the generated capture date and time information as metadata of the second image file, and
store the capture date and time information stored as the metadata of the second image file as the capture date and time information about the second image file in the DB.

4. The electronic device of claim 1, wherein the processor is configured to identify generation of the image file or turn-on of the electronic device after being turned off, as the request for detection of information about the image file.

5. The electronic device of claim 1, wherein the processor is configured to, based on identifying the image file whose information is detected as a third image file including capture date and time information in metadata, store the metadata of the third image file in the DB.

6. The electronic device of claim 1, wherein the processor is configured to:
search for at least one image file of at least one first image file not storing metadata or at least one second image file not including capture date and time information in metadata and provide the at least one image file in a list,
based on a location of an image file selected from the list by a first gesture being changed by a second gesture, generate a date and time corresponding to the changed location as capture date and time information about the image file, and
store the generated capture date and time information as the capture date and time information about the image file or metadata of the image file.

7. The electronic device of claim 6, wherein the processor is configured to provide the list including at least one image file of the at least one first image file or the at least one second image file sorted based on a final modification date and time of the first image file or the second image file stored in the DB configured to manage the metadata of the image file.

8. The electronic device of claim 1, wherein the processor is configured to: based on detecting a third image file where capture date and time information included in metadata does not match date and time information included in a file name among at least one third image file including the capture date and time information in the metadata, provide a recommendation menu capable of changing the capture date and time information included in the metadata into the date and time information included in the file name.

9. The electronic device of claim 8, wherein the processor is configured to: based on the capture date and time information included in the metadata not matching the date and time information included in the file name, provide a recommendation menu capable of changing the date and time information included in the file name into the capture date and time information included in the metadata.

10. The electronic device of claim 1, wherein the processor is configured to:
search for at least one image file of at least one first image file not including metadata or at least one second image file not including capture date and time information in metadata and provide the at least one image file in a list, and
based on identifying selection of an image file from the list, provide a menu capable of generating metadata of the selected image file based on input information.

11. A method for generating additional information about a file in an electronic device, the method comprising:
based on identifying a request for detection of information about an image file, reading the image file and detecting the information;
based on identifying that the image file whose information is detected is a first image file not storing metadata, generating final modification time information about the first image file stored in a file system of the electronic device as capture date and time information about the first image file;
storing the generated capture date and time information as file information about the first image file managed in the file system; and
storing the capture date and time information stored as the file information about the first image file in the file system as the capture date and time information about the first image file in a DB configured to manage the metadata of the image file.

12. The method of claim 11, further comprising additionally storing the capture date and time information in the file information about the first image file comprising a structure in the file system.

13. The method of claim 11, further comprising:
upon identifying that the image file whose information is detected is a second image file not including capture date and time information in metadata, generating final modification time information about the second image file stored in the file system as capture date and time information about the second image file;
storing the generated capture date and time information as metadata of the second image file; and
storing the capture date and time information stored as the metadata of the second image file as the capture date and time information about the second image file in the DB.

14. The method of claim 11, further comprising identifying generation of the image file or turn-on of the electronic device after being turned off, as the request for detection of information about the image file.

15. The method of claim 11, further comprising, based on identifying the image file whose information is detected as a third image file including capture date and time information in metadata, storing the metadata of the third image file in the DB.
